# DEMANDE DE BREVET EUROPEEN

(11) **EP 1 698 248 A1**
(43) Date de publication de la demande: **06.09.2006**
(21) Numéro de dépôt: 06300176.2
(22) Date de dépôt: 28.02.2006
(51) Int. Cl.: A45C 5/14, B62B 1/10

(54) **Dispositif de transport de charge**

(30) Priorité: 01.03.2005 FR 0550542
(71) Demandeur: Johner, Christophe, 76100 Rouen (FR)
(72) Inventeur: Johner, Christophe, 76100 Rouen (FR)
(74) Mandataire: CAPRI

(57) **Abrégé**

Dispositif de transport de charge comportant :
un réceptacle (1, 2) destiné à contenir une charge,
des moyens de roulement (4) destinés à faciliter le déplacement du réceptacle sur le sol, les moyens de roulement s'étendant de façon périphérique autour dudit réceptacle de manière à définir un axe de rotation X,
des moyens de guidage (6) aptes à être saisis manuellement par l'utilisateur pour faciliter la manoeuvrabilité du dispositif,
caractérisé en ce que les moyens de guidage (6) se connectent de manière détachable au réceptacle.

## Description

La présente invention concerne un dispositif de transport de charge comprenant un réceptacle destiné à contenir une charge, des moyens de roulement destinés à faciliter le déplacement du réceptacle sur le sol et des moyens de guidage aptes à être saisis manuellement par l'utilisateur pour faciliter la manoeuvrabilité du dispositif.

La présente invention s'applique particulièrement mais non exclusivement au domaine de la bagagerie. En effet, une application privilégiée de ce dispositif de transport de charge est une valise destinée à transporter des effets personnels, tels que des vêtements et similaire, à emporter avec soi lors d'un voyage.

Les dispositifs de transport de charge communément utilisés se composent généralement d'un réceptacle ou contenant, définissant un espace interne de logement pour la charge à transporter. Ces dispositifs sont généralement montés sur roulettes, par exemple présentes au nombre de deux, ou de quatre, venant en appui sur le sol pour faciliter le déplacement des charges. La charge contenue dans le réceptacle peut être de diverses natures. Par exemple, cette charge peut être un liquide, tel que de l'eau, ou des objets matériels divers, tels que des vêtements, des livres, etc...

A ce jour, de nombreux types de bagages utilisés pour le transport de vêtements ou autres objets personnels ou utilitaires dans le cadre d'un voyage, d'un déménagement ou d'une simple promenade sont répertoriés dans l'art antérieur. Par exemple, de tels bagages peuvent s'apparenter à des sacs en toile ou à des valises rigides de plus ou moins grande contenance. Ces sacs ou ces valises présentent bien souvent une configuration globale parallélépipédique. De tels sacs sont généralement sous la forme d'un sac unitaire muni d'un système d'ouverture et de fermeture sous forme d'un volet rabattable apte à être fermé au moyen d'une fermeture à glissière ou de boutons pression. Les valises sont quant à elles généralement composées de deux coques rigides pivotant l'une par rapport à l'autre entre une position d'ouverture et de fermeture. Ces bagages comportent en outre habituellement un organe de préhension, tel qu'une poignée. Par ailleurs, de tels bagages sont généralement équipés de roulettes destinées à faciliter leur déplacement. Dans ce cas, la poignée peut alors faire office d'organe de guidage et de traction du bagage considéré : il suffit alors à l'utilisateur de saisir la poignée, d'incliner le bagage relativement au sol afin que seules les roulettes soient en contact avec le sol puis d'exercer une force de traction afin de déplacer le bagage. Dans le but d'améliorer encore davantage le confort de déplacement de tels bagages, une poignée télescopique peut être prévue afin d'adapter la hauteur de la poignée à la taille de l'utilisateur.

Toutefois, les bagages développés dans l'art antérieur souffrent de plusieurs inconvénients. Un premier inconvénient est notamment lié à la conformation parallélépipédique des bagages qui confère à ces bagages une capacité de stockage limitée et donne bien souvent lieu à des bagages de dimensions considérables pour définir un espace interne de logement de vêtements suffisant. Ainsi, de tels bagages ont pour inconvénient majeur un défaut d'optimisation de la capacité de stockage. Un autre inconvénient est lié à la faible manoeuvrabilité de ces bagages sur des terrains présentant un sol inadéquat ou irrégulier, tel que par exemple des terrains meubles (terreux, sablonneux, etc.) ou parsemés d'obstacles (trottoirs, pavés, grilles de recouvrement de bouches d'aération etc...).

De plus, pour déplacer de tels bagages, il est nécessaire de soulever une partie de leurs poids, afin que seules les roulettes soient en contact avec le sol. Un effort de levage est donc nécessaire.

Dans l'art antérieur, on connaît également des dispositifs de transport de charge comprenant un réceptacle sphérique ou cylindrique pourvu de moyens de guidage connectant le réceptacle au niveau de l'axe de rotation de la sphère ou du cylindre. On peut notamment citer les documents WO 2004/106138, US 3 198 540, FR 2 668 341 et GB 2 398 292. Les dispositifs décrits dans ces documents souffrent de divers inconvénients, tel qu'un encombrement important, un accès difficile au réceptacle, une mauvaise capacité de stockage et de rangement, une faible sécurité contre le vol.

La présente invention a donc pour but de définir un dispositif de transport de charge et notamment un bagage surmontant les inconvénients précités de l'art antérieur.

Plus particulièrement, la présente invention a pour but de définir un dispositif de transport de charge présentant une configuration particulièrement originale et disposant d'une capacité de stockage amplement optimisée.

Un autre but de la présente invention est de définir un dispositif de transport de charge présentant une capacité de roulement et de franchissement d'obstacles améliorée, et ceci sans effort de levage.

Un but de la présente invention est encore de définir un dispositif de transport de charge de conception simplifiée et de coût de revient avantageux.

Un autre but encore est d'augmenter l'accès au réceptacle tout en garantissant une parfaite sécurité contre le vol.

Pour atteindre ces buts, la présente invention propose un dispositif de transport de charge comportant un réceptacle destiné à contenir une charge, des moyens de roulement destinés à faciliter le déplacement du réceptacle sur le sol, les moyens de roulement s'étendant de façon périphérique autour dudit réceptacle de manière à définir un axe de rotation X, des moyens de guidage aptes à être saisis manuellement par l'utilisateur pour faciliter la manoeuvrabilité du dispositif, caractérisé en ce que les moyens de guidage se connectent au réceptacle sur l'axe X de manière détachable.

La présente invention prévoit donc des moyens de roulement entourant ou encerclant ledit réceptacle. Ces moyens peuvent alors soit être formés par le réceptacle lui-même, soit être formés par des moyens distincts du réceptacle. Selon une caractéristique intéressante, lorsque ces moyens de roulement sont distincts du réceptacle, ces moyens s'étendent avantageusement de façon continue autour du réceptacle formant ainsi un cadre fermé, tel qu'un anneau ou une boule enveloppant au moins partiellement ledit réceptacle. Dans le cas de tels moyens de roulement distincts du réceptacle, une possibilité de désolidarisation partielle, voire de retrait complet, de ce cadre de roulement peut être envisagé afin de faciliter l'accès au réceptacle pour l'utilisateur.

Le fait de pouvoir retirer les moyens de guidage du réceptacle permet d'accéder plus facilement au réceptacle. On peut également se servir des moyens de guidage pour verrouiller le réceptacle en condition fermée. Les moyens de guidage peuvent ainsi remplir une fonction de serrure pour le réceptacle. La séparation des moyens de guidage permet aussi un stockage plus aisé du réceptacle et un remplissage et vidage plus commode.

Le détachement des moyens de guidage à partir du réceptacle peut se faire par déformation ou démontage des moyens de guidage. Selon une forme de réalisation avantageuse, le réceptacle comprend deux éléments de réception situés sur l'axe de rotation X des moyens de roulement, et les moyens de guidage comprennent une fourche pourvue de deux éléments d'engagement aptes à coopérer respectivement avec les éléments de réception du réceptacle, la fourche comprenant au moins une articulation permettant de retirer un élément d'engagement de son élément de réception respectif, et ainsi détacher les moyens de guidage du réceptacle. Avantageusement, des moyens de blocage sont prévus pour bloquer l'articulation lorsque la fourche est connectée au réceptacle. De préférence, les éléments de réception comprennent des logements de rotule et les éléments de dégagement comprennent des têtes de rotule aptes à coopérer avec les logements pour former des rotules. Ainsi, il est très facile de retirer les moyens de guidage en désengageant une tête de rotule de son logement, puis l'autre tête de rotule de son logement. Il est alors possible d'ouvrir le réceptacle pour accéder à son contenu. On peut toutefois envisager de pouvoir accéder au contenu du réceptacle sans retirer les moyens de guidage du réceptacle. Il est à noter que l'utilisation de rotules est envisageable indépendamment du fait que les moyens de guidage sont détachables du réceptacle.

Selon une autre caractéristique de l'invention, le réceptacle comprend au moins un méplat définissant un plan de repos stable pour le réceptacle. Avantageusement, les logements sont disposés au centre de méplats respectifs et forment des évidements qui s'étendent vers l'intérieur du réceptacle. De préférence, la fourche comprend un arceau arqué ayant deux extrémités qui se prolongent respectivement par deux branches sensiblement droites qui s'étendent le long des méplats, l'articulation étant située à la jonction de la branche avec l'arceau. Les méplats s'étendent ainsi parallèlement l'un à l'autre et perpendiculairement à l'axe de rotation du réceptacle. En variante, un ou plusieurs méplats peuvent être situés autre part sur le réceptacle. Il est à noter que des méplats peuvent être mis en oeuvre sur un réceptacle sans que les moyens de guidage soient détachables du réceptacle.

Selon un autre aspect de l'invention, les moyens de guidage comprennent un bras de traction qui s'étend à partir de la fourche et se termine par une partie de préhension, le bras étant connecté à la fourche par une articulation, de sorte que le bras est rabattable sur le réceptacle, le bras étant avantageusement arqué de manière à se plaquer contre le réceptacle, une fois rabattu, avec la partie de préhension en contact du réceptacle. La fourche suit le contour du réceptacle et le bras également lorsqu'il est rabattu de sorte que les moyens de guidage présentent un encombrement minimum. Il est à noter que l'articulation du bras est une caractéristique qui peut être mise en oeuvre indépendamment du fait que les moyens de guidage sont détachables du réceptacle.

Selon une forme de réalisation avantageuse, les moyens de roulement comprennent au moins une bande de roulement s'étendant autour dudit réceptacle, ladite bande de roulement se situant dans un plan de roulement coupant transversalement ledit réceptacle avantageusement de façon sensiblement médiane, ledit réceptacle comportant au moins une section transversale de configuration sensiblement circulaire s'étendant dans le même plan que ledit plan de roulement, ledit réceptacle comprenant deux parties aptes à être assemblées de manière à définir un espace interne de logement de charge, lesdites deux parties ayant avantageusement une forme et une contenance similaires et étant avantageusement reliées l'une à l'autre par des moyens d'articulation, de préférence déformables, les deux parties se connectent au niveau d'un plan d'assemblage Pa qui est sensiblement perpendiculaire à l'axe de rotation X.

Avantageusement, ledit réceptacle présente une configuration globale sensiblement sphérique. Il s'agit là d'une conception simple, pratique et esthétique : une simple boule creuse est entraînée en rotation autour d'un axe horizontal. Le réceptacle peut être parfaitement sphérique, hormis au niveau des méplats.

La présente invention sera maintenant plus amplement décrite dans la description détaillée suivante, faisant référence aux dessins accompagnant sur lesquels :
la figure 1 est une vue en perspective d'un dispositif de transport de charge selon un premier mode de réalisation de l'invention,
la figure 2 est une vue de côté du dispositif de transport de charge de la figure 1,
la figure 3 est une vue de face partiellement en coupe du dispositif de transport de charge des figures 1 et 2,
la figure 4 est une vue en perspective d'un réceptacle en position de ouverte,
la figure 5 est une vue en perspective d'un réceptacle d'un dispositif de dispositif de transport de charge selon un autre mode de réalisation de la présente invention en position ouverte,
la figure 6 est une vue en perspective d'un second mode de réalisation d'un dispositif de transport de charge en accord avec la présente invention, et
la figure 7 est une vue en perspective d'un troisième mode de réalisation d'un dispositif de transport de charge en accord avec la présente invention.

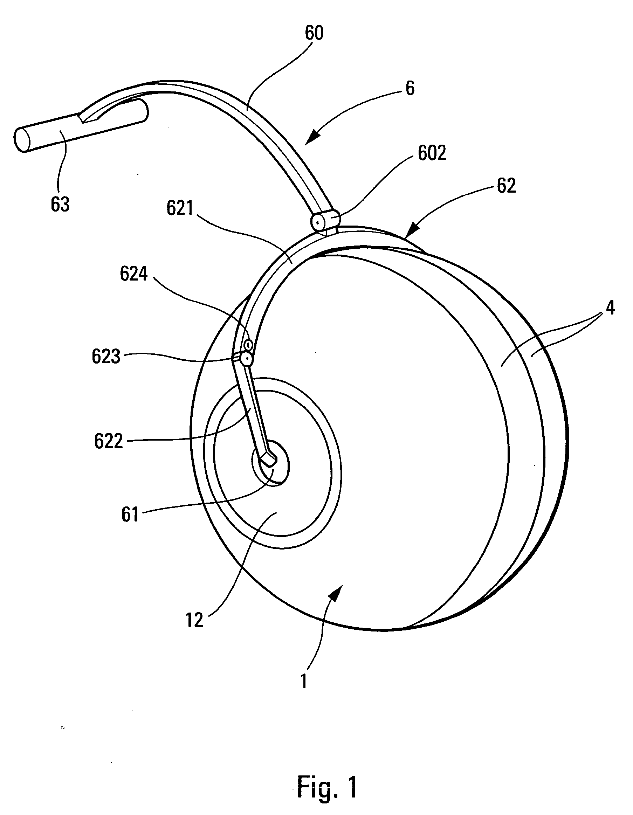

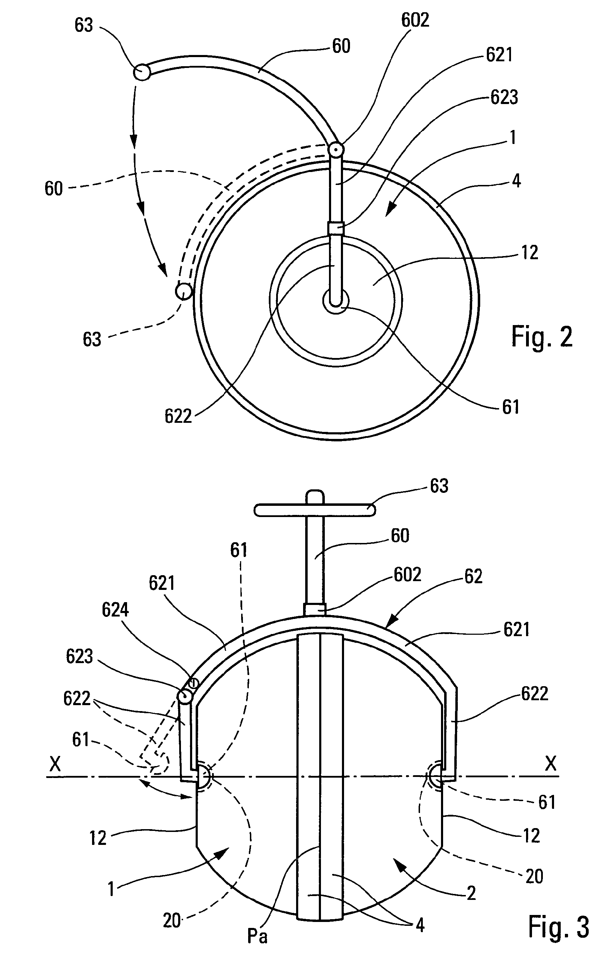

En référence aux figures 1 et 3, le dispositif de transport de charge selon la présente invention comporte trois éléments constitutifs, à savoir un réceptacle 1, 2, des moyens de roulement 4, et des moyens de guidage 6. En réalité, comme nous allons le voir par la suite, les moyens de roulement 4, peuvent être formés par le réceptacle de sorte que l'invention peut être constituée à proprement parler d'uniquement deux éléments structurels, à savoir le réceptacle et les moyens de guidage.

Le réceptacle 1, 2 a pour fonction de contenir une charge à transporter. Cette charge peut correspondre à des objets matériels quelconques, tels que des habits, des livres, des produits de beauté et de soins, etc. Cette charge à transporter peut également être de nature fluidique tel que de l'eau.

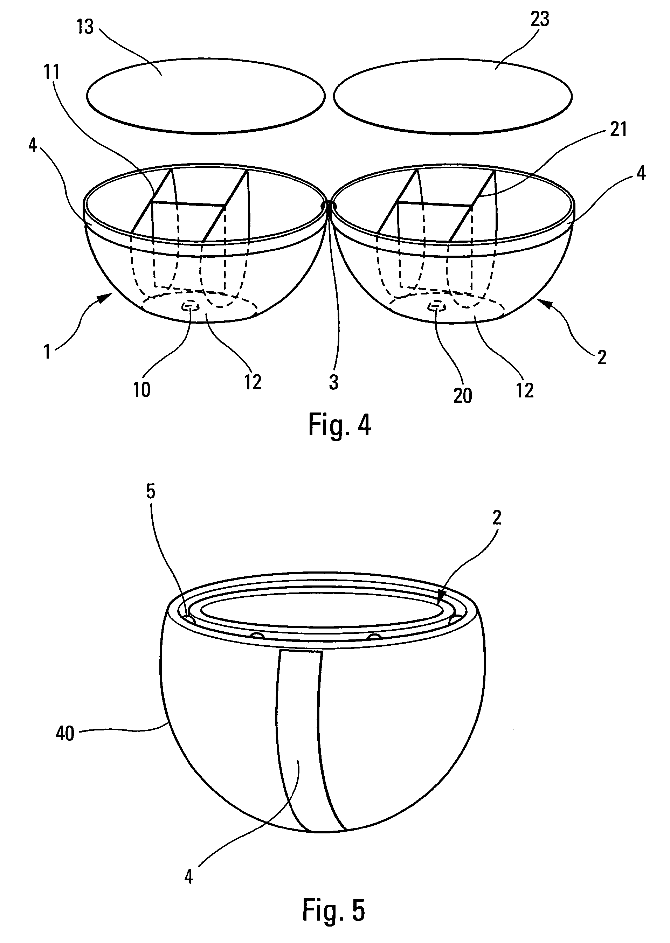

Dans certains modes de réalisation représentés sur les figures, le réceptacle 1, 2 est avantageusement composé de deux parties à assembler. Ces deux parties sont alors déplaçables entre une position d'ouverture (parties non assemblées) représentée sur la figure 4 et une position de fermeture (parties assemblées) représentée sur les figures 1 à 3 et 7. Selon cet exemple, les deux parties forment chacune un récipient de forme hémisphérique. Ces récipients sont alors assimilables à deux bols ou coques à rapporter l'un(e) sur l'autre en position inversée selon un plan d'assemblage Pa. Le réceptacle présente ainsi dans ces modes de réalisation une configuration sensiblement ou parfaitement sphérique. L'assemblage de ces deux parties peut être réalisé par tous moyens de solidarisation appropriés tels que par un système de scratch, un système d'emboîtement utilisant des liaisons mâles et femelles, un système d'encliquetage, un système de vissage utilisant des filetages complémentaires, etc. Il est à remarquer que la configuration globale du réceptacle peut être différente d'une sphère. En effet, des configurations ovoïdales, cylindriques ou de tonnelets peuvent également convenir. Par ailleurs, dans le cas présent, les deux parties à assembler sont de forme et de contenance sensiblement identiques. Toutefois, il est clair que la présente invention n'est pas limitée à cette forme de réalisation, les deux parties pouvant présenter des formes et des configurations totalement distinctes. Par exemple, les deux parties peuvent être formées par une embase de grande dimension pourvue d'une ouverture de remplissage obturable par un capot. Un tel capot peut alors se présenter sous la forme d'un chapeau d'obturation apte à recouvrir ladite ouverture, ou d'un volet monté mobile entre une position d'ouverture et de fermeture pour sélectivement dégager et fermer l'accès à ladite ouverture, par exemple sous l'effet d'une rotation dudit volet. Avantageusement, les deux parties du réceptacle sont reliées l'une à l'autre par des moyens d'articulation 3. Dans le cas présent, ces moyens d'articulation comportent une charnière, de préférence réalisée en un matériau déformable, comprenant deux parties d'ancrage se fixant respectivement à l'intérieur desdites deux parties constitutives du réceptacle 1, 2. Un tel ancrage permet ainsi de dissimuler ces moyens d'articulation 3 en position d'assemblage du réceptacle. Il est à noter que les moyens de solidarisation peuvent faire office de moyens d'articulation assurant ainsi en outre un rôle de charnière pour le déplacement relatif des deux parties constitutives du réceptacle.

Le réceptacle 1, 2 selon l'invention comporte une surface externe susceptible de venir en contact de roulement avec le sol et une surface interne en contact de la charge à transporter. Les surfaces internes des deux parties constitutives du réceptacle définissent ainsi un espace interne de logement de charge apte à recevoir la charge à transporter. Cet espace peut être avantageusement compartimenté au moyen de parois de cloisonnement 11, 21 positionnées dans ledit réceptacle 1, 2, comme représenté sur la figure 4. Cette compartimentation résulte alors en la création d'une pluralité d'espaces de rangement de conformation et de dimensions distinctes permettant de caler au mieux les différents objets composant la charge à transporter. Ces parois 11,21 peuvent être fixées dans le réceptacle 1, 2 par tous moyens appropriés. Par exemple, ces parois peuvent être maintenues fixement par engagement de leurs bords dans des rainures ménagées au niveau de la surface interne du réceptacle. Les parois peuvent aussi être libres, mais fixes dans le réceptacle une fois refermé.

Chaque partie, avantageusement hémisphérique, du réceptacle peut être obturée par un couvercle 13, 23, tel que représenté sur la figure 4. Ainsi, chaque partie 1, 2 du réceptacle est séparée de sorte que le contenu d'une partie ne va pas se loger dans l'autre partie. Associées aux parois de cloisonnement 11, 21, chaque partie de réceptacle définit plusieurs compartiments fermés. Les couvercles permettent d'ouvrir le réceptacle sans risque que son contenu en sorte. De plus, on peut se servir de ces couvercles circulaires 13, 23 comme plateau de table. Là encore, l'utilisation de tels couvercles 13, 23 est une caractéristique qui peut être mise en oeuvre indépendamment du fait que les moyens de guidage sont déconnectables du réceptacle.

Selon une caractéristique avantageuse de l'invention, le réceptacle 1, 2 comprend en outre au moins une partie de surface externe définissant un plan de repos sur lequel le réceptacle peut être positionné de manière stable. Ce plan de repos peut alors être constitué par un méplat 12 formant une surface sensiblement plane apte à maintenir le dispositif de transport de charge en position stable sur le sol.

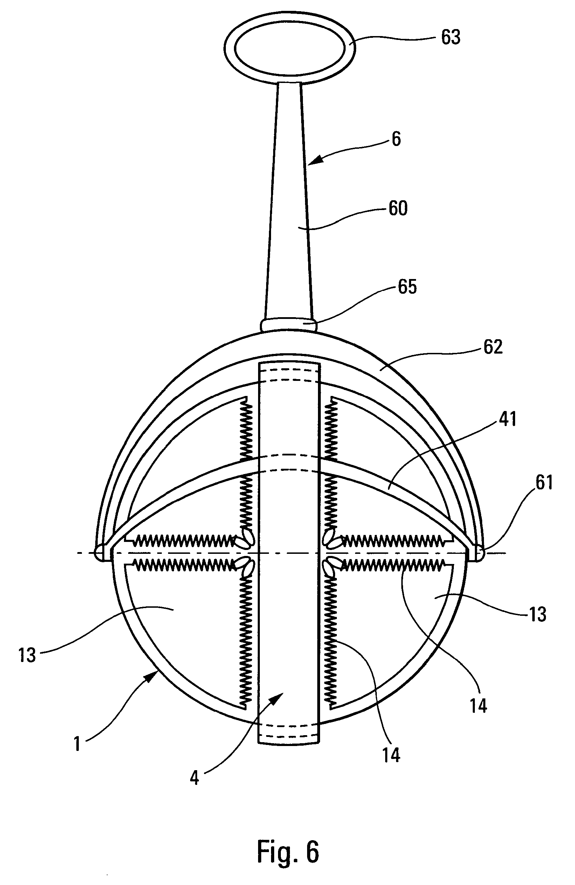

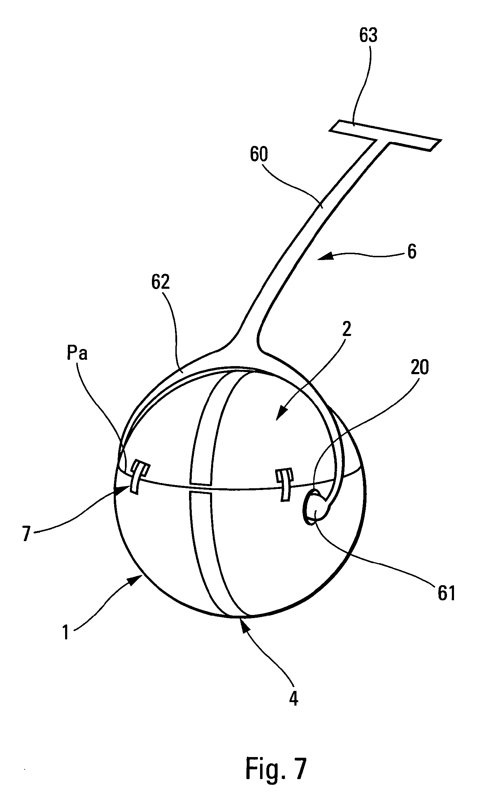

D'autre part, le réceptacle comporte des éléments de réception 10, 20, pour les moyens de guidage 6 qui seront décrits ci-après. Ces éléments de réception 10, 20 peuvent être prévus soit sur les deux parties constitutives du réceptacle, comme représentée sur les figures 1 à 4, soit sur uniquement une des deux parties constitutives du réceptacle, comme représentée sur la figure 7, soit au niveau d'une structure spécifique incorporant les moyens de roulement tel qu'il ressortira de la description de la figure 6. Dans tous ces exemples de réalisation, les éléments de réception 10, 20 comportent deux logements de rotule sous forme d'évidements sensiblement sphériques aptes à coopérer avec les moyens de guidage. Cependant, tous moyens de fixation appropriés peuvent être mis en oeuvre.

Les moyens de roulement 4 assurent le déplacement du réceptacle 1, 2. De préférence, ces moyens de roulement comprennent au moins une bande de roulement s'étendant circonférenciellement autour du réceptacle selon au moins un plan de roulement en définissant un axe de rotation X. Avantageusement, ce ou ces plan(s) de roulement s'étend(ent) transversalement relativement au réceptacle 1, 2. Tel qu'illustré sur les figures 1 et 2, ce ou ces plan(s) de roulement peut/peuvent couper ledit réceptacle de façon sensiblement médiane. Dans un mode de réalisation représentée sur les figures 1 à 3, ces moyens de roulement 4 comprennent deux bandes de roulement 4 s'étendant de part et d'autre du plan d'assemblage Pa. Autrement dit, ces bandes de roulement se situent dans ce cas de part et d'autre de la zone de jonction des deux parties constitutives de réceptacle. Selon un autre mode de réalisation illustré sur la figure 7, les moyens de roulement 4 peuvent comporter une unique bande de roulement définissant un plan de roulement s'étendant transversalement relativement au plan d'assemblage Pa. Dans ces deux modes de réalisation, les moyens de roulement 4 s'étendent sur les deux parties constitutives du réceptacle.

Il est important de souligner que les moyens de roulement 4 peuvent être soit constitués par le réceptacle lui-même, soit être complètement dissociés du réceptacle. Dans le premier cas, les moyens de roulement sont donc constitués par une partie de la surface externe du réceptacle venant directement en contact de roulement avec le sol. Dans ce cas, le réceptacle sera avantageusement réalisé en un matériau rigide afin d'obtenir un déplacement par roulement efficace du dispositif de transport de charge. Dans le second cas, des moyens spécifiques sont prévus pour assurer le déplacement du réceptacle. De tels moyens sont par exemple constitués d'une bande de roulement, telle que précédemment évoquée, réalisée en un matériau rigide, déformable, apte à absorber les chocs, tel que du caoutchouc, fixée sur la surface externe du réceptacle, par exemple au moyen d'un adhésif. Dans ce cas, les moyens de roulement seront avantageusement réalisés en un matériau sensiblement rigide alors que le réceptacle pourra quant à lui être réalisé en un matériau rigide ou en matériau souple. Dans ces modes de réalisation, les moyens de roulement comportent avantageusement une surface en contact avec le sol comprenant un profil sensiblement arqué de manière à limiter les forces de frottements créées par le déplacement du dispositif au sol.

Dans une variante de réalisation illustrée sur la figure 6, le dispositif de transport de charge comporte un réceptacle apte à contenir la charge à transporter, placé dans une coque rigide externe 40. Cette coque rigide externe peut comporter une surface externe pouvant venir directement en contact de roulement avec le sol, ou peut comporter des moyens de roulement 4 spécifiques. Dans le présent exemple, la coque rigide externe est revêtue d'une bande de roulement venant en contact avec le sol. Dans ce mode de réalisation, le réceptacle est prévu libre en rotation relativement aux moyens de roulement 4 de sorte que la charge contenue dans le réceptacle n'est pas entraînée en rotation lors de la sollicitation des moyens de roulement. Pour ce faire, des roulements à bille 5 peuvent notamment être interposés entre la surface interne de la coque rigide externe 40 et la surface externe du réceptacle. En variante, un matériau autolubrifiant, tel que l'Ertalon, peut être utilisé pour assurer cette libre rotation du réceptacle. Il est à noter que les moyens de fixation 10, 20 (outre leur fonction de fixation des moyens de guidage 6 qui sera ci-après décrite) peuvent servir à l'accrochage du réceptacle (via un système de clipage par exemple) ainsi qu'à l'accrochage des moyens de calage 11, 21. Pour cette forme de réalisation, le réceptacle 1, 2 et les moyens de roulement 4 peuvent présenter des configurations similaires ou totalement différentes. Par exemple, la coque rigide externe 40 peut être constituée de deux parties hémisphériques assemblées après montage du réceptacle, également sensiblement sphérique, à l'intérieur de la coque rigide. Il est à noter que la coque rigide externe 40 pourrait très bien être formée par un anneau définissant une bande de roulement encerclant de façon sensiblement médiane le réceptacle, comme on peut le voir sur la figure 6. Cet anneau 4 peut alors être pourvu de deux arceaux latéraux 41 faisant saillie vers l'extérieur munis respectivement d'un profil d'accrochage à leurs extrémités. Ces profils peuvent alors comprendre des roulements à bille aptes à coopérer avec des moyens correspondants ménagés au niveau du réceptacle. Le réceptacle 1 est alors monté libre en rotation dans ledit anneau et la charge contenue dans le réceptacle est maintenue en équilibre horizontal, même lors du déplacement en rotation de l'anneau.

Sur la figure 6, le réceptacle n'est pas constitué de deux parties à assembler, mais d'un élément unique pourvu de volets 13 ouvrables par des fermetures à glissières 14. Les arceaux 41 tournent autour du réceptacle avec l'anneau de roulement 4, alors que le réceptacle reste statique en rotation.

Dans le premier mode de réalisation des figures 1 à 4, on peut noter que les logements de rotule 10, 20, qui sont situés sur l'axe de rotation X, sont centrés au milieu de deux méplats respectifs 12 qui s'étendent parallèlement l'un à l'autre et perpendiculairement à l'axe de rotation X. Les logements de rotule 10, 20, se présentent sous la forme d'évidements s'étendant à partir des méplats vers l'intérieur du réceptacle. Ainsi, les deux parties 1 et 2 du réceptacle peuvent reposer de manière parfaitement stable sur leurs méplats respectifs 12, comme on peut le voir sur la figure 4. Le réceptacle peut même être disposé à l'état ouvert avec les deux parties 1 et 2 reliées ensemble. On peut alors se servir du réceptacle dans l'aménagement intérieur comme pied de table basse en posant un plateau dessus.

Les moyens de guidage 6, illustrés sur les figures 1, 2, 3, 6 et 7, peuvent être saisis manuellement par l'utilisateur afin de déplacer le dispositif de transport de charge, de préférence par traction. Ces moyens de guidage comportent selon un exemple de réalisation non limitatif une partie de préhension 63 située dans le prolongement d'un bras 60 solidaire d'une fourche 62. La fourche 62 comporte deux extrémités pourvues de têtes de rotules aptes à se loger dans les logements correspondants 10, 20. Ces têtes sont ainsi positionnées sur l'axe de rotation X du réceptacle 1, 2. Cet axe de rotation X peut s'étendre de façon transversale (figure 1) ou parallèle par rapport au plan d'assemblage des parties constitutives du réceptacle. Avantageusement, ces moyens de guidage sont montés de façon détachable ou escamotable sur le réceptacle. Il est par exemple possible de prévoir une fourche fonctionnant de façon similaire à une pince. On peut également prévoir une fourche élastiquement déformable comme celle de la figure 7. On peut ainsi retirer les têtes de rotule 61 de leurs logements respectifs en déformant élastiquement la fourche. Il est à noter, dans le mode de réalisation de la figure 7, que les deux logements de rotules sont formés par la partie inférieure 1 du réceptacle, de sorte que la deuxième partie supérieure 2 peut servir de couvercle qui peut être ouvert sans devoir retirer préalablement les moyens de guidage 6. En se référant aux figures 1 à 3, qui représentent le mode de réalisation préféré de l'invention, on peut voir que les moyens de guidage comprennent une fourche 62 qui est articulée. Cette fourche comprend un arceau 621 qui se prolonge à chacune de ses extrémités par deux branches 622, qui sont avantageusement sensiblement parallèles. Pour articuler cette fourche, il est prévu une articulation 623 qui est avantageusement située au niveau où une branche 622 se connecte à l'arceau 621. On peut prévoir une ou deux articulations. Ainsi, la branche 622 peut pivoter autour de cette articulation 623 entre deux positions extrêmes représentées sur la figure 3 : une position d'engagement dans laquelle la tête est engagée dans le logement 20 et une position écartée (en traits interrompus) dans laquelle la tête de rotule est retirée de son logement. Dans cette dernière position, on peut désengager l'autre tête de son logement respectif, de sorte que les moyens de guidage 6 peuvent être désolidarisés du réceptacle. Avantageusement, l'articulation 623 peut être bloquée en position d'engagement par tous moyens de blocage appropriés, comme par exemple une serrure 624. Il faut également noter que, dans ce mode de réalisation, le plan d'assemblage Pa des deux parties 1 et 2 du réceptacle est perpendiculaire à l'axe de rotation X, de sorte que la fourche articulée, une fois bloquée en position d'engagement, verrouille le réceptacle à l'état fermé. On peut ainsi dire que la serrure 624 bloque à la fois la fourche et verrouille le réceptacle. D'autre part, les moyens de guidage peuvent également être pourvus d'un bras de traction arqué 60 qui est articulé sur la fourche 62. Pour ce faire, une articulation 602 peut être prévue au niveau où le bras se connecte à la fourche. Une fois rabattu sur le réceptacle (voir figure 2 en traits interrompus), le bras épouse la forme du réceptacle, et la poignée 63 peut même venir en contact du réceptacle. Une position stable peut être atteinte lorsque le réceptacle et la poignée rabattue viennent en contact du sol. On peut ainsi remarquer à partir des figures 1 à 3, que tous les éléments des moyens de guidage, à savoir le bras (une fois rabattu), l'arceau 621 et les branches 622 suivent ou épousent étroitement le pourtour du réceptacle pour réduire au maximum l'encombrement du dispositif. Les branches 622 sont notamment très proches des méplats 12.

Les trois modes de réalisation qui viennent d'être décrits comportent des caractéristiques spécifiques qui peuvent être mises en oeuvre ensemble, ou au contraire séparément. Ceci est particulièrement le cas de la connexion détachable des moyens de guidage, la conception de la connexion sous la forme de rotules, des méplats, de l'articulation d'un bras pour le rabattre sur le réceptacle, qui peuvent être protégés indépendamment les uns des autres.

Bien que la présente invention ait été décrite en référence à des modes de réalisations particuliers de celle-ci, il est entendu qu'elle n'est pas limitée par ces modes de réalisation. Au contraire, un homme du métier peut y apporter toute modification utile sans sortir du cadre de la présente invention telle que défini par les revendications annexées.

On peut également mettre en oeuvre l'invention sous la forme d'une brouette ou d'un chariot.

## Revendications

1. Dispositif de transport de charge comportant :
un réceptacle (1, 2) destiné à contenir une charge,
des moyens de roulement (4) destinés à faciliter le déplacement du réceptacle sur le sol, les moyens de roulement s'étendant de façon périphérique autour dudit réceptacle de manière à définir un axe de rotation X,
des moyens de guidage (6) aptes à être saisis manuellement par l'utilisateur pour faciliter la manoeuvrabilité du dispositif,
**caractérisé en ce que** les moyens de guidage (6) se connectent au réceptacle sur l'axe X de manière détachable.

2. Dispositif de transport de charge selon la revendication 1, dans lequel le réceptacle comprend deux éléments de réception (10, 20) situés sur l'axe de rotation X des moyens de roulement (4), et les moyens de guidage (6) comprennent une fourche (62) pourvue de deux éléments d'engagement (61) aptes à coopérer respectivement avec les éléments de réception (10, 20) du réceptacle, la fourche comprenant au moins une articulation (623) permettant de retirer un élément d'engagement de son élément de réception respectif, et ainsi détacher les moyens de guidage du réceptacle.

3. Dispositif de transport de charge selon la revendication 2, dans lequel des moyens de blocage (624) sont prévus pour bloquer l'articulation (623) lorsque la fourche est connectée au réceptacle.

4. Dispositif de transport de charge selon la revendication 2 ou 3, dans lequel les éléments de réception comprennent des logements de rotule (10, 20) et les éléments de dégagement comprennent des têtes de rotule (61) aptes à coopérer avec les logements pour former des rotules.

5. Dispositif de transport de charge selon l'une quelconque des revendications précédentes, dans lequel le réceptacle comprend au moins un méplat (12) définissant un plan de repos stable par le réceptacle.

6. Dispositif de transport de charge selon les revendications 4 et 5, dans lequel les logements (10, 20) sont disposés au centre de méplats respectifs (12) et forment des évidements qui s'étendent vers l'intérieur du réceptacle.

7. Dispositif de transport de charge selon la revendication 6, dans lequel la fourche comprend un arceau arqué (621) ayant deux extrémités qui se prolongent respectivement par deux branches sensiblement droites (622) qui s'étendent le long des méplats (12), l'articulation (623) étant située à la jonction de la branche avec l'arceau.

8. Dispositif de transport de charge selon l'une quelconque des revendications 2, 3, 4 et 6, dans lequel les moyens de guidage comprennent un bras de traction (60) qui s'étend à partir de la fourche (62) et se termine par une partie de préhension (63), le bras étant connecté à la fourche par une articulation (602), de sorte que le bras est rabattable sur le réceptacle, le bras étant avantageusement arqué de manière à se plaquer contre le réceptacle, une fois rabattu, avec la partie de préhension (63) en contact du réceptacle.

9. Dispositif de transport de charge selon l'une quelconque des revendications précédentes, dans lequel les moyens de roulement (4) comprennent au moins une bande de roulement s'étendant autour dudit réceptacle, ladite bande de roulement se situant dans un plan de roulement coupant transversalement ledit réceptacle avantageusement de façon sensiblement médiane, ledit réceptacle (1, 2) comportant au moins une section transversale de configuration sensiblement circulaire s'étendant dans le même plan que ledit plan de roulement, ledit réceptacle comprenant deux parties (1, 2) aptes à être assemblées de manière à définir un espace interne de logement de charge, lesdites deux parties ayant avantageusement une forme et une contenance similaires et étant avantageusement reliées l'une à l'autre par des moyens d'articulation (3), de préférence déformables, les deux parties se connectent au niveau d'un plan d'assemblage Pa qui est sensiblement perpendiculaire à l'axe de rotation X.

10. Dispositif de transport de charge selon l'une quelconque des revendications précédentes, dans lequel ledit réceptacle (1, 2) présente une configuration globale sensiblement sphérique.
